(19) Europäisches Patentamt / European Patent Office / Office européen des brevets

(11) **EP 3 083 849 B1**

(12) **EUROPEAN PATENT SPECIFICATION**

(45) Date of publication and mention
of the grant of the patent:
**02.10.2019 Bulletin 2019/40**

(21) Application number: **14827414.5**

(22) Date of filing: **13.12.2014**

(51) Int Cl.:
***C09D 5/32*** *(2006.01)*

(86) International application number:
**PCT/EP2014/003340**

(87) International publication number:
**WO 2015/090548 (25.06.2015 Gazette 2015/51)**

(54) **GREENHOUSE ARRANGEMENT**

GEWÄCHSHAUSANORDNUNG

AGENCEMENT DE SERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.12.2013 NL 2011979**

(43) Date of publication of application:
**26.10.2016 Bulletin 2016/43**

(73) Proprietor: **RKW SE
67227 Frankenthal (DE)**

(72) Inventor: **CHERET, Estelle
2920 Kalmthout-Heide (BE)**

(74) Representative: **Busch, Tobias
Anwaltskanzlei Busch & Kollegen
Schlossergasse 4
67227 Frankenthal (DE)**

(56) References cited:
**WO-A1-2004/076543     WO-A1-2009/128857**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a greenhouse arrangement comprising a framework and a system for thermicity improvement.

Greenhouses can be divided into glass greenhouses and plastic greenhouses. Plastics mostly used are polyethylene film and multiwall sheets of polycarbonate material, or PMMA acrylic glass.

Solar radiation mainly consisting of ultra violet, visible and near infrared radiation (IR) range, passes through the greenhouse covers and warms up the interior such as plants and soil. Heat thus generated inside the greenhouse during a day will be emitted back to the atmosphere at night. Heat energy dissipation will lead to the temperature drop inside the greenhouse resulting in damage to the plants.

In modern greenhouses systems are implemented to improve thermicity. To keep thermal loss to a minimum, the thermicity value should be as low as possible. Thermicity is a measure of the transmission of IR through a film. The lower the thermicity value, the lower the transmission of IR and the lower the heat loss.

For example greenhouse screens are such systems, also referred to as thermal screens or energy screens. They send the heat of the infrared rays both to the plants and to the other elements inside the greenhouse.

Greenhouse screens are systems for thermicity improvement. The following types are distinguished in the state of the art:

- woven or crocheted products comprising strips of film, sheeting or sheet laminate;

- textile products in the form of woven, crocheted or non-woven products,

- plastic sheeting, plastic sheet laminate or aluminium laminate.

WO 2008/091192 A1 discloses a greenhouse screen which is intended for substantially horizontal application and for thermal stratification of the air space under a greenhouse roof, and which prevents drop formation from condensation.

WO 2013/041524A1 discloses a greenhouse screen comprising strips of film material that are interconnected by a yarn framework of transverse threads and longitudinal threads to form a continuous product, wherein the yarn framework is thermally bonded to at least one side of the strips of film material, wherein also those parts of the yarn framework that is thermally bonded to the strips have liquid-transporting capacity by capillary action. The amount of yarn in the yarn framework interconnecting and holding the strips can herewith be reduced.

Other greenhouse screens are also known for example through EP 0 109 951, FR 2 071 064, EP 1 342 824, WO 2008/091192 and in WO 2011/096882.

DE 20 2008 004 181 U1 discloses a two-layer greenhouse screen comprising a standard greenhouse screen as bottom layer and on top of this layer reflective strips that are glued to the screen at certain intervals.

US 2004/198126 refers to a light-shading sheet for agricultural and horticultural use comprising a light-shading white film and a reinforcement made of textile fabric or a nonwoven fabric.

JP 10327684 A discloses a shading net capable of reflecting strong solar heat and suitable for agriculture, horticulture etc, The shading net comprises tape-shaped yarns of nonwoven fabric, e g of continuous glass fiber filaments, thermally fused to the surface of a net base fabric.

JP 2004154078 A discloses a greenhouse formed by laminating a thermoplastic film on one or both surfaces of a clothlike material. The clothlike material consists of thermoplastic resin wire elements.

JP 2004160812 A discloses a moisture permeable sheet having water barrier properties and used as an agricultural cover material. The sheet comprises a moisture permeable film laminated on a cloth-like material and a porous sheet.

WO 2004/076543 A1 discloses a fire-retardant composition for producing a plastics film providing at least about 60% transmission of light. It comprises an extrudable polyolefinic film-forming polymer, a fire retardant component, and a polymeric or oligomeric hindered amine light stabiliser (HAL$)-based component having substituted piperidyl groups and substituted triazine groups wherein at least one of the substitutions is a morpholine group.

The reduction of heat loss from a greenhouse is especially essential during nighttime by trapping the infrared heat radiation from the soil and plants that is normally lost. This helps to maintain optimum plant growth conditions by keeping the average temperature higher plus it extends the growing season by allowing crops to be planted earlier in the spring season and to grow longer in the autumn.

The thermicity value of plastic sheetings is often not optimal due to a radiation window in the mid range of the IR region. Most of the emitted energy lies between 7 to 14 micron (700-1400 cm$^{-1}$). Usually, the thinner a film is, the worse the thermicity value provided. In order to improve the thermicity value and prevent heat IR loss absorbing additives are commonly used. Usually mineral based additives such as silica based minerals, calcinated kaolin clay, crystobalite or fused silica are added to plastic sheetings, usually based on copolymer EVA to optimize film thermicity value.

There is a need in the art for greenhouse arrangements comprising a system for thermicity improvement without negative side effects such as decreased flammability or transparency.

Therefore, an object of the present invention, amongst other objects, is to provide a system for thermicity improvement in a greenhouse.

Specifically, this object, amongst other objects, is met by providing a greenhouse arrangement according to claim 1, with preferred variants set forth in the dependent claims

Specifically, this object is met by providing a greenhouse arrangement comprising system for thermicity improvement, which comprises at least onefilm comprising an additive suitable for enhancing the thermicity value of the film, or IR absorber, wherein said additive, or IR absorber, comprises an alkyl phosphonic acid or derivatives thereof.

The invention is characterized by a system for thermicity improvement, which comprises at least one film that has a transmission of IR of lower than 40%, especially lower than 25%.

For example the system for thermicity improvement can be designed as a thermal screen, a roof and/or a covering of a greenhouse.

Preferably this film has a transparency of more than 70 %, preferably more than 80 %, especially more than 85 %. This combination of a low transmission of IR with a high transparency is essential for the invention.

In a preferred variant of the invention, the film is designed as a polyolefin film. The film preferably has a thickness of 30 $\mu$m to 300 $\mu$m, such as 50 $\mu$m to 300 $\mu$m or 100 $\mu$m to 300 $\mu$m, preferably less than 200 $\mu$m.

In a preferred variation of the invention the film comprises an additive suitable for enhancing the thermicity value of the film, wherein said additive is present in an amount of 1 to 20 wt% of the film, wherein said additive comprises an alkyl phosphonic acid or derivatives thereof, wherein said film has a thermicity value of lower than 25%, preferably lower than 20% transmission of IR

Surprisingly, the present inventors found that alkyl phosphonic acids or derivatives thereof provide improved thermicity to polyolefin films. The obtained thermicity value is significantly improved versus known polyolefin films, rendering the present film suitable for the protection of plants against mild frost. Furthermore, the present polyolefin film allows an earlier harvest of plants grown under the film, and provides an increase in crop yield and crop quality. It was surprising that polyolefin films having a thickness lower than 300 $\mu$m could be provided which still have the improved thermicity value. Further, the present polyolefin films have a transparency which suffices for the use of the film as a greenhouse film. Preferably, the present polyolefin film has a thickness of less than 180, 150 or even less than 120 $\mu$m.

Thermicity as used in the present context is determined by FTIR spectroscopy as the fraction of mid IR radiation from 700 to 1400 cm$^{-1}$ over the total IR radiation passing through the film. Preferably, the present polyolefin film has a thermicity value of lower than 25%, 20% or even lower than 15%.

The improved thermicity according to the present invention is obtained when the present additive suitable for enhancing the thermicity value is present when used in an amount of 1 to 20 wt% of the film, preferably 1 to 15 wt%, or 2 to 15 wt%, more preferably in an amount of 2 to 8 wt%. The inclusion of the present additive in this amount provides a colour stabile film with a transparency of the same quality as in commercial available polyolefin films. Further, these indicated amounts allow to produce thin polyolefin films, having a thickness below 200 $\mu$m, while the improved thermicity value is obtained.

In a preferred embodiment, the present alkyl phosphonic acid is chosen from a methane phosphonic acid, ethane phosphonic acid and propane phosphonic acid, or derivatives thereof such as a salt or ester thereof. The salt may be an ammonium salt, guanidinium salt, DCDA, guanylurea, melamine, ethylene diamine or a piperazine salt.

In a further preferred embodiment, the present alkyl phosphonic acid is an ammonium salt of an alkyl phosphonic acid, and /or is a phosphonic esther of an alkyl phosphonic acid, since these phosphonic acids provide a particularly improved thermicity value when present in small amounts. Further, the present ammonium salt of an alkyl phosphonic acid are available in powder form having a particle size (d99) of approximately 10 $\mu$m, which are stable at processing temperatures up to 200 - 250 °C. The present phosphonic esther of an alkyl phosphonic acid is stable up to approximately 280 °C and is particularly useful fully transparent polyolefin films.

In yet another further preferred embodiment, the present alkyl phosphonic acid is chosen from dimethylspirophosphonate, ethylene diamine methane phosphonate and melamine methane phosphonate. These phosphonates provide a transparent thermal polyolefin film having also a reduced flammability. This is advantageous because polyolefin films, and especially the generally used low density polyethylene, is highly flammable which is a risk factor for both plants as workers.

To further reduce the flammability of the present polyolefin films, the films comprise in a preferred embodiment a triazine derivative, preferably selected from a melamine and N,N',N"'-Tris(2,4-bis(1-hydrocarbyloxy-2,2,6,6,-tetramethylpiperidin-4-yl)alkylamino)-s-triazin-6-yl)-3,3'-ethylenediiminodipropylamine. These triazine derivatives provide a synergistic flame retardant compound, especially in combination with dimethylspirophosphonate.

In a preferred embodiment, the present polyolefin films further comprise a stabilization additive chosen from the group consisting of antioxidant, UV stabilizer, UV absorber, chelating agent in an effective stabilizing amount. Further additives which might be present in the present polyolefin films are for example plasticizers, lubricants, rheology additives, catalyst, flow-control agents, optical brighteners, antistatic agents and/or blowing agents. First experiments show that the present additives for enhancing thermicity combine advantageously with UV stabilizers. More specifically, good weathering results are obtained for 4 to 10 years with the present films in combination with a UV stabilizer. In other words, the present invention provides thin films having an improved thermicity value, which films are transparent, high flame resistant properties, and UV stabile for at least 4 years.

Preferably, the present polyolefin comprises one or more, such as two or more, three or more, or even four or more, from antifog additives, light diffusing/scattering additives, surface modifiers, processing aids, nucleating agents, foaming agents and nanocomposites.

Another preferred additive in the present polyolefin films are pigments. Preferably, the present polyolefin films further comprise white, coloured and/or black pigments. Suitable white pigments are $TiO_2$.

The present polyolefin is preferably chosen from the group consisting of polyethylene polymers, or copolymers, EVA polymer, EBA copolymer, 1-2 polybutadiene, hexene, octene, based on Ziegler Natta or Metallocene catalyst technology and mixtures thereof. More preferably, the present polyolefin is (linear) low density polyethylene having for example a density of about 0.92 g/cc. Alternatively, the present polyolefin film is a medium density polyethylene.

The present polyolefin having an improved thermicity value is inventively used in greenhouse films. Accordingly, the present invention further relates to a multilayered film comprising a polyolefin film. Such a greenhouse film may comprise 2 to 10 layers, such as 3, 4, 5, 6, 7, 8, 9 or 10 layers. Preferably the present greenhouse film is a coextruded film. Preferably, the present greenhouse film is produced by blown film coextrusion. The widths range of the present greenhouse film is preferably from 1 to 20 meter. Most preferred are 2- and 5-layered coextruded films of a polyethylene or polyethylene copolymer outer layer. Preferably, the thickness of the greenhouse film is within the range of 30 to 300 $\mu$m, preferably 30 to 250 $\mu$m, especially 40 to 180 $\mu$m.

Given the beneficial properties of the present suitable for enhancing thermicity, the present invention relates according to another aspect to the use of an alkyl phosphonic acid as an additive for improving the thermicity value in a film, in a greenhouse film especially as energy screens in greenhouses. Preferably, the present invention relates to the use of the additives suitable for enhancing thermicity value in polyolefin films wherein the amount of the additives is of 1 to 20 wt% of the film, preferably 1 to 15 wt%, or 2 to 10 wt%, more preferably in an amount of 2 to 8 wt% of the polyolefin film, such as 6, 7, 8 or 9 wt% of the polyolefin film.

Alternatively, the present invention relates to the use of the present additives for improving the thermicity value of polyolefin films lower than 25%, 20% or even lower than 15% transmission.

The present invention further relates to the use of the present additives suitable for enhancing the thermicity value in masterbatches for the preparation of polyethylene films.

Preferably the present invention relates to the present use wherein said alkyl phosphonic acid is chosen from a methane phosphonic acid, ethane phosphonic acid, propane phosphonic acid.

In a preferred embodiment the present invention relates to the use of the present additive wherein said alkyl phosphonic acid is an ammonium salt of an alkyl phosphonic acid, and /or is a phosphonic esther of an alkyl phosphonic acid, since these phosphonic acids provide a particularly improved thermicity value when present in small amounts. Further, the present ammonium salt of an alkyl phosphonic acid are available in powder form having a particle size (d99) of approximately 10 $\mu$m, which are stable at processing temperatures up to 200 - 250 °C. The present phosphonic esther of an alkyl phosphonic acid is stable up to approximately 280 °C and is particularly useful fully transparent polyolefin films. Accordingly, in a preferred embodiment, the present invention relates to the use of white powdered ammonium salt of an alkyl phosphonic acid having a d99 size of approximately 10 $\mu$m for increasing or improving the thermicity value of a polyolefin film.

In a preferred embodiment, the present invention relates to the use of dimethylspirophosphonate, ethylene diamine methane phosphonate and/or melamine methane phosphonate for increasing or improving the thermicity value of a polyolefin film, preferably of a greenhouse film having a thickness of 150 to 220 $\mu$m. In a preferred embodiment the present invention relates to the use of dimethylspirophosphonate, ethylene diamine methane phosphonate and/or melamine methane phosphonate for increasing or improving the thermicity value and reducing the flammability of a polyolefin film.

According to a another aspect the present invention relates to polyolefin films having a thermicity value of less than 25% transmission. According to a second aspect the present invention relates to the use of an alkyl phosphonic acid as an additive for increasing the thermicity in a film. According to yet another aspect the present invention relates to the use of the present polyolefin films as a greenhouse film.

Ingredients for the production of polyolefin films are commonly provided in masterbatches. A masterbatch is a concentrated mixture of additives which additives are encapsulated during a heat process into a carrier resin which is then cooled and cut into a granular shape. Therefore, the present defined additive suitable for enhancing the thermicity value of a film is advantageously incorporated in a masterbatch. Therefore, the present invention relates, according to a further aspect, to the use of the present alkyl phosphonic acids in a masterbatch to improve thermicity of a film. Further, the present invention relates to a masterbatch, such as an additive masterbatch, comprising the present alkyl phosphonic acid, preferably dimethylspirophosphonate.

The inventive films are produced by a method comprising the following steps:

- preparation of at least 2 polymeric compositions,

- wherein at least one polymer composition comprises an alkyl phosphonic acid or derivatives there,

- heating the polymeric compositions until melting is obtained,

- blown coextrusion of the polymeric compositions.

Further features and advantages of the invention will become apparent from the description of the figures and from the figures themselves.

Fig. 1 shows a greenhouse arrangement.

Fig. 2 shows a sectional view of a system for thermicity improvement.

Fig. 3 shows a particle size distribution of a thermicity additive.

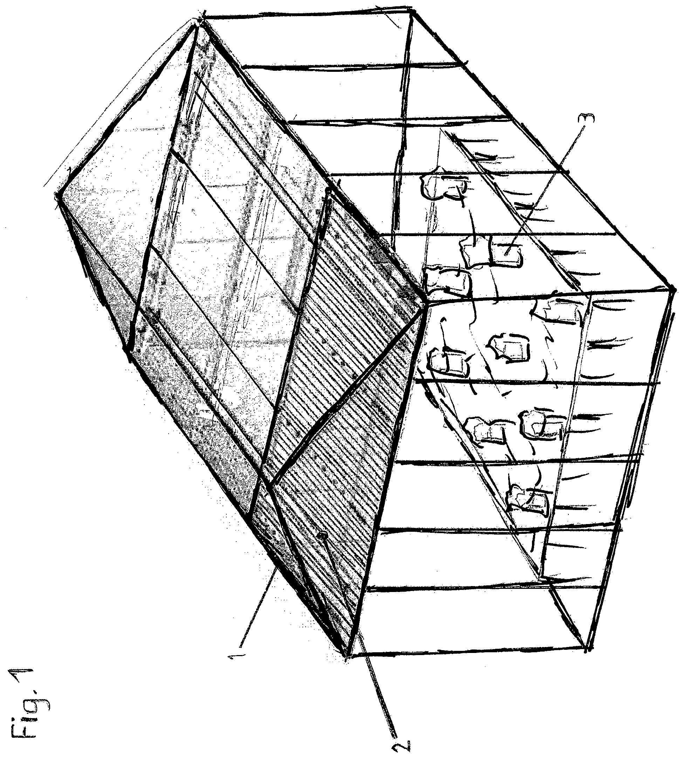

Figure 1 shows a greenhouse arrangement. The greenhouse arrangement comprises a framework 1. Further the greenhouse arrangement comprises a system for thermicity improvement 2. The system 2 is arranged in the greenhouse below the cover of the greenhouse.

In the example the system for thermicity improvement 2 is a horizontal thermal screen. This energy screen creates an adequate microclimate for plants 3 in order to increase their yield, and also to improve their quality. The system for thermicity improvement 2 is connected directly and/or indirectly to the framework, that it has a horizotal orientation.

The system for thermicity improvement 2 comprises at least one polyolefin film comprising an additive suitable for enhancing the thermicity value of the film, said additive comprises an alkyl phosphonic acid or derivatives thereof. The system for thermicity improvement 2 has a thermicity of lower than 25% transmission.

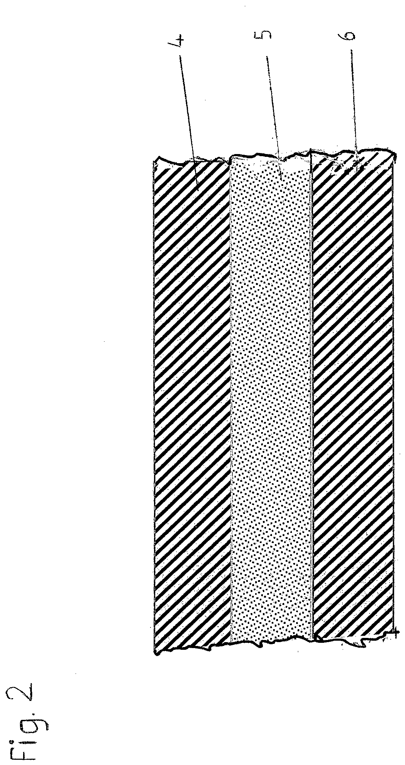

Figure 2 shows a sectional view of the system for thermicity improvement 2. The system for thermicity improvement 2 consists in the exemplary embodiment of a multilayer film having three layers 4, 5, 6. The outer layers 4, 6 have the same polymeric composition.

The system for thermicity improvement 2 is produced by first preparing two polymeric compositions. In the exemplary embodiment both polymer composition comprise an alkyl phosphonic acid or derivatives there. Both polymeric compositions are mixed and heated until melting is obtained. Then a blown coextrusion is performed of the two polymeric compositions so that out of one polymeric composition the middle layer 5 is formed and from the other polymers composition the two outer layers 4, 6 are formed.

In the exemplary embodiment shown in Fig. 2 an phosphonic esther of an alkyl phosphonic acid was used as thermicity additive. The alkyl alkylphosphonic ester has 24% phosporus and melting point of more than 245 °C.

Low density polyethylene (LDPE) was used as carrier.

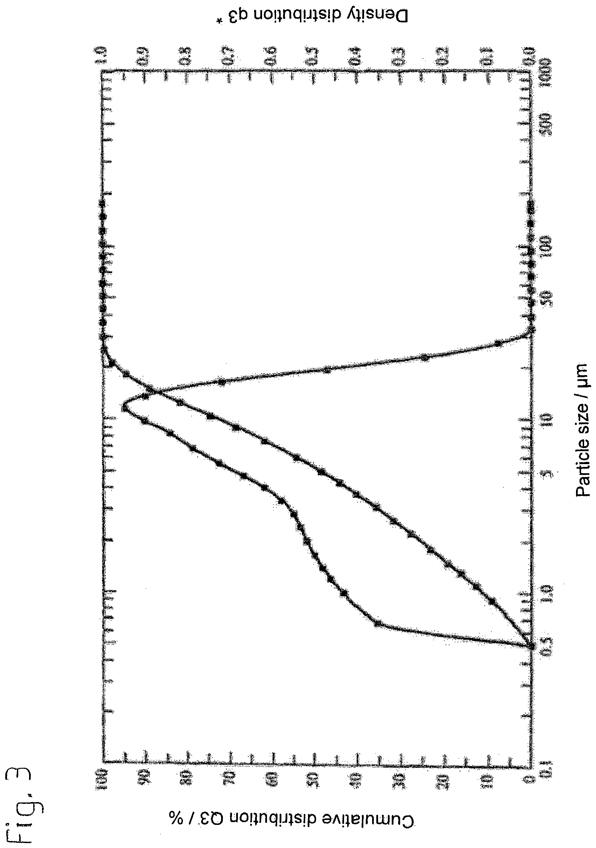

Figure 3 shows cumulative distribution in % on the left ordinate and the distribution density on the right ordinate as a function of particle size in $\mu$m of a thermicity additive plotted on the abscissa.

In the exemplary embodiment shown in Fig. 3 an phosphonic esther of an alkyl phosphonic acid was used as thermicity additive.

The particle sizes are thus preferably less than 80 $\mu$m, in particular smaller than 60 $\mu$m. In the exemplary embodiment the cumulative distribution reaches 100% at a particle size of 43 $\mu$m.

The particle sizes are preferably more than 0,05 $\mu$m, in particular more than 0,1 $\mu$m.

The present invention will be further elucidated in the following example showing a preferred embodiment of the present invention.

**Example**

Materials

As thermicity additives an ammonium salt of an alkyl phosphonic acid and a phosphonic esther of an alkyl phosphonic acid were used:

| Thermicity additive I: | salt of ethylene diamine phosphate (19.5% Phosphorus and 17.5% of Nitrogen) |
| Thermicity additive II: | salt of melamine phosphat (14% Phosphorus and 37% Nitrogen) |
| Thermicity additive III: | alkylphosphonic ester (24% Phosporus and melting point > 245 °C) |

Low density polyethylene (LDPE) was used as carrier.

Sample preparation

Table 1

| Sample 1 | LDPE |
|---|---|
| Sample 2 | LDPE + 7.5 wt % thermicity additive I |
| Sample 3 | LDPE + 7.5 wt % thermicity additive II |
| Sample 4 | LDPE + 5.5 wt % thermicity additive III |
| Sample 5 | LDPE + 10 wt % brominated additives + $Sb_2O_3$. |

Preparation LDPE films

The ingredients of the samples were prepared by Brabender Internal Mixer at heating until proper melting was obtained. 150 $\mu$m films were prepared by blown extrusion on MPM film extruder.

Thermicity analysis

The IR spectra were recorded using Perkin Elmer FTIR spectrophotometer with 2 cm$^{-1}$ resolution. The thermicity was calculated as follows:

$$\text{Thermicity} = [A_i / A_0] \times 100\%$$

Wherein $A_i$ is the area integrated under transmittance spectrum between 700 and 1400 cm$^{-1}$ and wherein $A_0$ is the area between 700 and 1400 cm$^{-1}$ at the case of 100% transmittance.

The accelerated exposure of prepared samples was done on a Q-UV (Q-panel Company) equipped with UV 314 lamps. The duration of exposure cycle was 12h (8h irridation at 40°C sequenced by 4h of dark at 50°C.

Results thermicity

Table 2

| Sample 1 | 64.9% |
|---|---|
| Sample 2 | 23.6% |
| Sample 3 | 11.8% |
| Sample 4 | 17.6% |
| Sample 5 | 50.1% |

The results in table 2 show that by using ammonium salts of an alkyl phosphonic acid an improved thermicity is provided (sample 2 and 3) in comparison without these additives (sample 1). Further, by using phosphonic esther of an alkyl phosphonic acid an improved thermicity is provided.

Besides thermicity, another important factor for the greenhouse application is the total light transmission and the direct light transmission of the film, in order to transmit as much light as possible through the film. The light transmission is measured and the results are given in table 3 below.

Transparency (% of total transmission):

Table 3

|  | Total light transmission (%) |
|---|---|
| Sample 1 | 89.5% |
| Sample 2 | 87.8% |
| Sample 3 | 78.2% |
| Sample 4 | 88.4% |
| Sample 5 | 60.2% |

As can be seen in table 3, the transparency of the samples 2, 3 and 4 is not significantly less than the reference LDPE film (sample 1). Accordingly, samples 2, 3 and 4 are suitable for use as a greenhouse film. Further, the direct light transmission of sample 4 was with 62.6% not significantly less than sample 1 (71%), resulting in that sample 4 is of particular relevance for use as a greenhouse film.

In order to test the influence of the present additives on the weathering properties of the films, weathering tests are performed. Specifically, a weathering test according to DIN53384; ISO4892-3; ASTMG154 was carried out with a QUV/se from Q-panel weathering tester, under an UVA lamp of 340 nm with 0.89 W/m$^2$/nm intension with a cycle of 8 hours at 60 °C followed by 4 hours at 50 °C.

A first sample 'a' was a LDPE film comprising 5 wt% thermicity additive III , and 7.5 wt% UV stabilizer. A second sample 'b' was a LDPE film comprising 10 wt% thermicity additive III , and 7.5 wt% UV stabilizer.

After the weathering, the residual elongation at break (REB) is measured according to EN IS0527-1; EN ISO527-3. The results are shown in table 4 for sample a and sample b.

Weathering

Table 4

| REB | 0 h | 250 h | 500 h | 750 h | 1000 h | 1250 h | 1505 h | 1762 h | 2021 h |
|---|---|---|---|---|---|---|---|---|---|
| 'a' | 100% | 105.7% | 102.8% | 98.2% | 100.4% | 98.5% | 99.2% | 97.2% | 88.6% |
| 'b' | 100% | 102.4% | 99.0% | 98.9% | 108.6% | 100.9% | 97.3% | 97.1% | 86.8% |

As can be shown in table 4, the weathering is at a high level for 1700 - 2021 hours at least. This corresponds with 400 kly, which is comparable with about 4 years testing in the Benelux. Accordingly, the combination of an additive for enhancing the thermicity with a UV stabilizer provides a film having advantageous weathering properties for at least 4 years.

**Claims**

1. Greenhouse arrangement comprising

- a framework (1) and
- a system for thermicity improvement (2), which comprises at least one

- film spread over and/or connected directly and/or indirectly to the framework

- comprising an additive suitable for enhancing the thermicity of the film, wherein said additive comprises an alkyl phosphonic acid or derivatives thereof,

      - wherein said alkyl phosphonic acid is chosen from

        - a methane phosphonic acid,
        - ethane phosphonic acid,
        - propane phosphonic acid
        or

      - wherein said alkyl phosphonic acid is

        - an ammonium salt of an alkyl phosphonic acid, and /or is
        - a phosphonic esther of an alkyl phosphonic acid
        or

      - wherein said alkyl phosphonic acid is chosen from

        - dimethylspirophosphonate,
        - ethylene diamine methane phosphonate,
        - melamine methane phosphonate,

      - wherein said film has a transmission of IR of lower than 40%, especially lower than 25%.

**2.** Greenhouse arrangement according to claim 1, wherein said film has a transparency of more than 70 %, preferably more than 80 %, especially more than 85 %.

**3.** Greenhouse arrangement according to claim 1 or 2, wherein said film is a polyolefin film, wherein the polyolefin is preferably chosen from the group consisting of polyethylene polymers, copolymers, EVA polymer, EBA copolymer, 1-2 polybutadiene, hexene, octene, based on Ziegler Natta or Metallocene catalyst technology and mixtures thereof.

**4.** Greenhouse arrangement according to any of the preceding claims, wherein said film has a thickness of 30 to 300 $\mu$m, preferably 30 to 250 $\mu$m especially 40 to 180 $\mu$m.

**5.** Greenhouse arrangement according to any of the preceding claims, wherein said additive is present in an amount of 1 to 20 wt% of the film, preferably 1 to 15 wt% of the film, especially 2 to 8 wt% of the film.

**6.** Greenhouse arrangement according to any of the preceding claims, further comprising a triazine derivative, preferably selected from a melamine and N,N',N'''-Tris(2,4-bis(1-hydrocarby)oxy-2,2,6,6,-tetramethylpiperidin-4-yl)alkylamino)-s-triazin-6-yl)-3,3'-ethylenediiminodipropylamine.

**7.** Greenhouse arrangement according to any of the preceding claims, further comprising a stabilization additive chosen from the group consisting of antioxidant, UV stabilizer, UV absorber, chelating agent in an effective stabilizing amount.

**8.** Greenhouse arrangement according to any of the preceding claims, further comprising one or more from antifog additives, light diffusing/scattering additives, surface modifiers, processing aids, nucleating agents, foaming agents and nanocomposites.

**9.** Greenhouse arrangement according to any of the preceding claims, further comprising pigments, preferably white, coloured and/or black pigments.

**10.** Multilayered greenhouse film comprising a polyolefin film having a thickness of 100 to 300 $\mu$m, comprising

    - an additive suitable for enhancing the thermicity of the film,
    - wherein said additive is present in an amount of 1 to 20 wt% of the film,
    - wherein said additive comprises an alkyl phosphonic acid or derivatives thereof,

      - wherein said alkyl phosphonic acid is chosen from

        - a methane phosphonic acid,
        - ethane phosphonic acid,

- propane phosphonic acid

or

- wherein said alkyl phosphonic acid is

- an ammonium salt of an alkyl phosphonic acid, and /or is
- a phosphonic esther of an alkyl phosphonic acid

or

- wherein said alkyl phosphonic acid is chosen from

- dimethylspirophosphonate,
- ethylene diamine methane phosphonate,
- melamine methane phosphonate,

- wherein said film has a thermicity of lower than 25% transmission.

11. Multilayered greenhouse film according to any of the claims 10, further comprising a triazine derivative, preferably selected from a melamine and N,N',N'''-Tris(2,4-bis(1-hydrocarbyloxy-2,2,6,6,-tetramethylpiperidin-4-yl)alkylamino)-s-triazin-6-yl)-3,3'-ethylenediiminodipropylamine.

12. Multilayered greenhouse film according to any of the claims 10 or 11, further comprising a stabilization additive chosen from the group consisting of antioxidant, UV stabilizer, UV absorber, chelating agent in an effective stabilizing amount.

13. Multilayered greenhouse film according to any of the claims 10 to 12, further comprising one or more from antifog additives, light diffusing/scattering additives, surface modifiers, processing aids, nucleating agents, foaming agents and nanocomposites.

14. Multilayered greenhouse film according to any of the claims 10 to 13, further comprising pigments, preferably white, coloured and/or black pigments.

15. Multilayered greenhouse film according to any of the claims 10 to 14, wherein the polyolefin is chosen from the group consisting of polyethylene polymers, copolymers, EVA polymer, EBA copolymer, 1-2 polybutadiene, hexene, octene, based on Ziegler Natta or Metallocene catalyst technology and mixtures thereof.

16. Use of an alkyl phosphonic acid as an additive for the reduction of IR transmission in a greenhouse film.

17. Use according to claim 16, wherein said alkyl phosphonic acid is chosen from a methane phosphonic acid, ethane phosphonic acid, propane phosphonic acid.

18. Use according to claim 16 or 17, wherein said alkyl phosphonic acid is an ammonium salt of an alkyl phosphonic acid, and /or is a phosphonic esther of an alkyl phosphonic acid.

19. Use according to any of the claims 16 to 18, wherein said alkyl phosphonic acid is chosen from dimethylspirophosphonate, ethylene diamine methane phosphonate and melamine methane phosphonate.

20. Use of an alkyl phosphonic acid, preferably dimethylspirophosphonate, in an additive masterbatch for the preparation of plastic films to improve the thermicity of a film.

**Patentansprüche**

1. Gewächshausanordnung, umfassend:

- ein Gestell (1) und
- ein System zur Thermizitätsverbesserung (2), das umfasst: wenigstens eine

- Folie, die über das Gestell gebreitet und/oder direkt und/oder indirekt mit diesem verbunden ist,

- die ein Additiv umfasst, das zum Verbessern der Thermizität der Folie geeignet ist, wobei das Additiv eine Alkylphosphonsäure oder Derivate davon umfasst,

- wobei die Alkylphosphonsäure ausgewählt ist aus:

- einer Methanphosphonsäure,
- Ethanphosphonsäure,
- Propanphosphonsäure
oder

- wobei die Alkylphosphonsäure

- ein Ammoniumsalz einer Alkylphosphonsäure ist und/oder
- ein Phosphonsäureester einer Alkylphosphonsäure ist
oder

- wobei die Alkylphosphonsäure ausgewählt ist aus:

- Dimethylspirophosphonat,
- Ethylendiaminmethanphosphonat,
- Melaminmethanphosphonat,
- wobei die Folie eine IR-Durchlässigkeit von unter 40 %, insbesondere unter 25 %, aufweist.

2. Gewächshausanordnung nach Anspruch 1, wobei die Folie eine Transparenz von mehr als 70 %, vorzugsweise mehr als 80 %, insbesondere mehr als 85 %, aufweist.

3. Gewächshausanordnung nach Anspruch 1 oder 2, wobei die Folie eine Polyolefinfolie ist, wobei das Polyolefin vorzugsweise ausgewählt ist aus der Gruppe bestehend aus Polyethylenpolymeren, Copolymeren, EVA-Polymer, EBA-Copolymer, 1,2-Polybutadien, Hexen, Octen, basierend auf Ziegler-Natta- oder Metallocen-Katalysatortechnologie, und Gemischen davon.

4. Gewächshausanordnung nach einem der vorangehenden Ansprüche, wobei die Folie eine Dicke von 30 bis 300 μm, vorzugsweise 30 bis 250 μm, insbesondere 40 bis 180 μm, aufweist.

5. Gewächshausanordnung nach einem der vorangehenden Ansprüche, wobei das Additiv in einer Menge von 1 bis 20 Gew.-% der Folie, vorzugsweise 1 bis 15 Gew.-% der Folie, insbesondere 2 bis 8 Gew.-% der Folie, vorhanden ist.

6. Gewächshausanordnung nach einem der vorangehenden Ansprüche, die ferner ein Triazinderivat umfasst, vorzugsweise ausgewählt aus einem Melamin und N,N',N'''-Tris(2,4-bis(1-hydrocarbyloxy-2,2,6,6-tetramethylpiperidin-4-yl)alkylamino)-s-triazin-6-yl)-3,3'-ethylendiiminodipropylamin.

7. Gewächshausanordnung nach einem der vorangehenden Ansprüche, die ferner ein Stabilisierungsadditiv, ausgewählt aus der Gruppe bestehend aus Antioxidans, UV-Stabilisator, UV-Absorber, Chelatbildner, in einer wirksamen stabilisierenden Menge umfasst.

8. Gewächshausanordnung nach einem der vorangehenden Ansprüche, die ferner eines oder mehrere aus Antifog-Additiven, Lichtdiffusions-/-streuungsadditiven, Oberflächenmodifikatoren, Verarbeitungshilfsmitteln, Keimbildnern, Schaumbildnern und Nanokompositen umfasst.

9. Gewächshausanordnung nach einem der vorangehenden Ansprüche, die ferner Pigmente, vorzugsweise weiße, farbige und/oder schwarze Pigmente, umfasst.

10. Mehrschichtige Gewächshausfolie, die eine Polyolefinfolie mit einer Dicke von 100 bis 300 μm umfasst, umfassend:

- ein Additiv, das zum Verbessern der Thermizität der Folie geeignet ist,

- wobei das Additiv in einer Menge von 1 bis 20 Gew.-% der Folie vorhanden ist,
- wobei das Additiv eine Alkylphosphonsäure oder Derivate davon umfasst,

   - wobei die Alkylphosphonsäure ausgewählt ist aus:

      - einer Methanphosphonsäure,
      - Ethanphosphonsäure,
      - Propanphosphonsäure
      oder

   - wobei die Alkylphosphonsäure

      - ein Ammoniumsalz einer Alkylphosphonsäure ist und/oder
      - ein Phosphonsäureester einer Alkylphosphonsäure ist
      oder

   - wobei die Alkylphosphonsäure ausgewählt ist aus:

      - Dimethylspirophosphonat,
      - Ethylendiaminmethanphosphonat,
      - Melaminmethanphosphonat,

- wobei die Folie eine Thermizität von unter 25 % Durchlässigkeit aufweist.

11. Mehrschichtige Gewächshausfolie nach einem der Ansprüche 10, die ferner ein Triazinderivat umfasst, vorzugsweise ausgewählt aus einem Melamin und N,N',N'''-Tris(2,4-bis(1-hydrocarbyloxy-2,2,6,6-tetramethylpiperidin-4-yl)alkylamino)-s-triazin-6-yl)-3,3'-ethylendiiminodipropylamin.

12. Mehrschichtige Gewächshausfolie nach einem der Ansprüche 10 oder 11, die ferner ein Stabilisierungsadditiv, ausgewählt aus der Gruppe bestehend aus Antioxidans, UV-Stabilisator, UV-Absorber, Chelatbildner, in einer wirksamen stabilisierenden Menge umfasst.

13. Mehrschichtige Gewächshausfolie nach einem der Ansprüche 10 bis 12, die ferner eines oder mehrere aus Antifog-Additiven, Lichtdiffusions-/-streuungsadditiven, Oberflächenmodifikatoren, Verarbeitungshilfsmitteln, Keimbildnern, Schaumbildnern und Nanokompositen umfasst.

14. Mehrschichtige Gewächshausfolie nach einem der Ansprüche 10 bis 13, die ferner Pigmente, vorzugsweise weiße, farbige und/oder schwarze Pigmente, umfasst.

15. Mehrschichtige Gewächshausfolie nach einem der Ansprüche 10 bis 14, wobei das Polyolefin ausgewählt ist aus der Gruppe bestehend aus Polyethylenpolymeren, Copolymeren, EVA-Polymer, EBA-Copolymer, 1,2-Polybutadien, Hexen, Octen, basierend auf Ziegler-Natta- oder Metallocen-Katalysatortechnologie, und Gemischen davon.

16. Verwendung einer Alkylphosphonsäure als Additiv zur Verringerung der IR-Durchlässigkeit in einer Gewächshausfolie.

17. Verwendung nach Anspruch 16, wobei die Alkylphosphonsäure ausgewählt ist aus einer Methanphosphonsäure, Ethanphosphonsäure, Propanphosphonsäure.

18. Verwendung nach Anspruch 16 oder 17, wobei die Alkylphosphonsäure ein Ammoniumsalz einer Alkylphosphonsäure ist und/oder ein Phosphonsäureester einer Alkylphosphonsäure ist.

19. Verwendung nach einem der Ansprüche 16 bis 18, wobei die Alkylphosphonsäure ausgewählt ist aus Dimethylspirophosphonat, Ethylendiaminmethanphosphonat und Melaminmethanphosphonat.

20. Verwendung einer Alkylphosphonsäure, vorzugsweise Dimethylspirophosphonat, in einer Additivvormischung zur Herstellung von Kunststofffolien, um die Thermizität einer Folie zu verbessern.

**Revendications**

1. Agencement de serre comprenant

 - une charpente (1) et
 - un système d'amélioration de la thermicité (2), qui comprend au moins un

   - film étendu sur et/ou directement et/ou indirectement raccordé à la charpente

     - comprenant un additif adapté pour augmenter la thermicité du film, dans lequel ledit additif comprend un acide alkylphosphonique ou des dérivés de celui-ci,

       - dans lequel ledit acide alkylphosphonique est choisi parmi

         - un acide méthanephosphonique,
         - un acide éthanephosphonique,
         - un acide propanephosphonique
         ou

       - dans lequel ledit acide alkylphosphonique est

         - un sel d'ammonium d'un acide alkylphosphonique, et/ou est
         - un ester phosphonique d'un acide alkylphosphonique
         ou

       - dans lequel ledit acide alkylphosphonique est choisi parmi

         - spirophosphonate de diméthyle,
         - méthanephosphonate d'éthylènediamine,
         - méthanephosphonate de mélamine,
         - dans lequel ledit film a une transmission IR inférieure à 40 %, en particulier inférieure à 25 %.

2. Agencement de serre selon la revendication 1, dans laquelle ledit film a une transparence supérieure à 70 %, de préférence supérieure à 80 %, en particulier supérieure à 85 %.

3. Agencement de serre selon la revendication 1 ou 2, dans lequel ledit film est un film de polyoléfine, dans lequel la polyoléfine est de préférence choisie dans le groupe constitué de polymères de polyéthylène, copolymères, polymère EVA, copolymère EBA, 1,2-polybutadiène, hexène, octène, basé sur une technologie de type catalyseur Ziegler-Natta ou métallocène et des mélanges de ceux-ci.

4. Agencement de serre selon l'une quelconque des revendications précédentes, dans lequel ledit film a une épaisseur de 30 à 300 $\mu$m, de préférence de 30 à 250 $\mu$m, en particulier de 40 à 180 $\mu$m.

5. Agencement de serre selon l'une quelconque des revendications précédentes, dans lequel ledit additive est présent en une quantité de 1 à 20 % en poids du film, de préférence de 1 à 15 % en poids du film, en particulier de 2 à 8 % en poids du film.

6. Agencement de serre selon l'une quelconque des revendications précédentes, comprenant en outre un dérivé de triazine, de préférence choisi parmi une mélamine et la N,N'',N'''-tris(2,4-bis(1-hydrocarbyloxy-2,2,6,6-tétraméthylpipéridin-4-yl)alkyl-amino)-s-triazin-6-yl)-3,3'-éthylènediiminodipropylamine.

7. Agencement de serre selon l'une quelconque des revendications précédentes, comprenant en outre un additif de stabilisation choisi dans le groupe constitué d'un antioxydant, un stabilisant UV, un absorbeur UV, un agent chélateur en une quantité stabilisante efficace.

8. Agencement de serre selon l'une quelconque des revendications précédentes, comprenant en outre l'un ou plusieurs parmi des additifs antibuée, des additifs de diffusion/dispersion de la lumière, des modificateurs de surface, des adjuvants de traitement, des agents de nucléation, des agents moussants et des nanocomposites.

9. Agencement de serre selon l'une quelconque des revendications précédentes, comprenant en outre des pigments, de préférence des pigments blancs, colorés et/ou noirs.

10. Film de serre multicouche comprenant un film de polyoléfine ayant une épaisseur de 100 à 300 μm, comprenant

  - un additif adapté pour améliorer la thermicité du film,
  - dans lequel ledit additif est présent en une quantité de 1 à 20 % en poids du film,
  - dans lequel ledit additif comprend un acide alkylphosphonique ou des dérivés de celui-ci,

    - dans lequel ledit acide alkylphosphonique est choisi parmi

      - un acide méthanephosphonique,
      - un acide éthanephosphonique,
      - un acide propanephosphonique
      ou

    - dans lequel ledit acide alkylphosphonique est

      - un sel d'ammonium d'un acide alkylphosphonique, et/ou est
      - un ester phosphonique d'un acide alkylphosphonique
      ou

    - dans lequel ledit acide alkylphosphonique est choisi parmi

      - spirophosphonate de diméthyle,
      - méthanephosphonate d'éthylènediamine,
      - méthanephosphonate de mélamine,

    - dans lequel ledit film a une thermicité inférieure à 25 % de transmission.

11. Film de serre multicouche selon l'une quelconque des revendications 10, comprenant en outre un dérivé de triazine, de préférence choisi parmi une mélamine et la N,N'',N'''-tris(2,4-bis(1-hydrocarbyloxy-2,2,6,6-tétraméthylpipéridin-4-yl)alkyl-amino)-s-triazin-6-yl)-3,3'-éthylènediiminodipropylamine.

12. Film de serre multicouche selon l'une quelconque des revendications 10 ou 11, comprenant en outre un additif de stabilisation choisi dans le groupe constitué d'un antioxydant, un stabilisant UV, un absorbeur UV, un agent chélateur en une quantité stabilisante efficace.

13. Film de serre multicouche selon l'une quelconque des revendications 10 à 12, comprenant en outre l'un ou plusieurs parmi des additifs antibuée, des additifs de diffusion/dispersion de la lumière, des modificateurs de surface, des adjuvants de traitement, des agents de nucléation, des agents moussants et des nanocomposites.

14. Film de serre multicouche selon l'une quelconque des revendications 10 à 13, comprenant en outre des pigments, de préférence des pigments blancs, colorés et/ou noirs.

15. Film de serre multicouche selon l'une quelconque des revendications 10 à 14, dans lequel la polyoléfine est choisie dans le groupe constitué de polymères de polyéthylène, copolymères, polymère EVA, copolymère EBA, 1,2-polybutadiène, hexène, octène, basé sur une technologie de type catalyseur Ziegler-Natta ou métallocène et des mélanges de ceux-ci.

16. Utilisation d'un acide alkylphosphonique en tant qu'additif pour la réduction de transmission IR dans un film de serre.

17. Utilisation selon la revendication 16, dans laquelle ledit acide alkylphosphonique est choisi parmi un acide méthanephosphonique, un acide éthanephosphonique, un acide propanephosphonique.

18. Utilisation selon la revendication 16 ou 17, dans laquelle ledit acide alkylphosphonique est un sel d'ammonium d'un acide alkylphosphonique et/ou est un ester phosphonique d'un acide alkylphosphonique.

**19.** Utilisation selon l'une quelconque des revendications 16 à 18, dans laquelle ledit acide alkylphosphonique est choisi parmi le spirophosphonate de diméthyle, le méthanephosphonate d'éthylènediamine et le méthanephosphonate de mélamine.

**20.** utilisation d'un acide alkylphosphonique, de préférence le spirophosphonate de diméthyle, dans un mélange maître d'additifs pour la préparation de films plastiques pour améliorer la thermicité d'un film.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008091192 A1
- WO 2013041524 A1
- EP 0109951 A
- FR 2071064
- EP 1342824 A
- WO 2008091192 A
- WO 2011096882 A
- DE 202008004181 U1
- US 2004198126 A
- JP 10327684 A
- JP 2004154078 A
- JP 2004160812 A
- WO 2004076543 A1